# EUROPEAN PATENT SPECIFICATION

(11) **EP 4 564 914 B1**
(45) Date of publication and mention of the grant of the patent: **04.11.2026**
(21) Application number: 23851549.8
(22) Date of filing: 18.07.2023
(51) Int. Cl.: H04W 36/00, H04W 74/00, H04W 74/0833

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 12.08.2022 CN 202210968849
(43) Date of publication of application: 04.06.2025
(73) Proprietor: Huawei Technologies Co., Ltd., Shenzhen, Guangdong 518129 (CN)
(72) Inventor: LI, Ruijie, Shenzhen, Guangdong 518129 (CN); GUAN, Lei, Shenzhen, Guangdong 518129 (CN); CHEN, Lei, Shenzhen, Guangdong 518129 (CN)
(74) Representative: Epping - Hermann - Fischer
(86) International application number: PCT/CN2023/107875
(87) International publication number: WO 2024/032326

(56) References cited:
- CN-A- 102 695 278
- CN-A- 112 399 630
- US-A1- 2019 045 567
- US-A1- 2019 364 599
- US-A1- 2020 329 503
- US-A1- 2022 159 710
- ERICSSON: "Introducing 5G indication in LTE RRC SIB", 3GPP DRAFT; R2-1710512 - INTRODUCING 5G INDICATION IN LTE RRC SIB, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Prague, Czech Republic; 20171009 - 20171013, 8 October 2017 (2017-10-08), Mobile Competence Centre ; 650, route des Lucioles ; F-06921 Sophia-Antipolis Cedex ; France , XP051342555

## Description

### TECHNICAL FIELD

The invention relates to a random access method, to communication methods, to a communication apparatus and to a computer program product.

### BACKGROUND

In a communication system, a terminal device completes cell synchronization by performing detection on a synchronization signal, and obtains master system information. The master system information includes a time-frequency position of a control channel for scheduling a system information block 1. The system information block 1 carries information related to random access. Therefore, a base station needs to send the synchronization signal and the system information block 1 in each cell, to establish a connection between the terminal device and the base station. In other words, provided that the base station needs to provide a wireless access service for a terminal, the base station needs to send the synchronization signal and the system information block 1. Consequently, overall overheads of the base station are high.

US 2019/045567 A1 relates to a network comprising a first base station (BS) and a second BS. The network is configured to execute instructions of the first BS connecting to a communication device via a first cell of the first BS with a signaling radio bearer (SRB); the second BS as a secondary node (SN) connecting to the communication device via a second cell while the first BS as a master node (MN) connecting to the communication device; the first BS transmitting a SN Modification Request message to a second BS to add or modify a configuration of the SN for the communication device in dual connectivity (DC); and the second BS transmitting a SN Modification Request Acknowledge message comprising to the first BS in response to the SN Modification Request message, wherein the SN Modification Request Acknowledge message comprises a new or modified configuration and a random access (RA) channel (RACH) configuration.

US 2022/159710 A1 relates to a method including receiving control information from a network device in a first cell, where the control information indicates to initiate a random access process in a second cell, and the control information includes a first identifier of the second cell. A random access process can then be initiated, based on the control information, in the second cell by using a random access parameter associated with the first identifier.

US 2019/364599 A1 relates to a method, a computer-readable medium, and an apparatus for wireless communication that enables a UE to generate a PRACH message based on an SSB/CSI-RS for a first cell or first band and to transmit the PRACH message via another cell or another band. Aspects enable a base station to select an SSB index for transmitting downlink communication to the UE on the first cell/first band. A UE receives an SSB/CSI-RS from a base station through a first cell and transmits a random access message for the SSB/ CSI-RS to the base station through a second cell. In another aspect the UE receives the SSB/CSI-RS from a base station through a first frequency range and transmits a random access message based on the SSB/CSI-RS to the base station through a second frequency range.

### SUMMARY

This application provides a communication method, to reduce overall power consumption of a network device. The invention is set out in the appended set of claims.

According to a first aspect, this application provides a communication method. The method may be performed by a terminal device, or may be performed by a component (for example, a chip or a circuit) of the terminal device. This is not limited herein. The method includes: The terminal device receives a first synchronization signal in a first cell; and the terminal receives first information in the first cell based on the first synchronization signal, where the first information indicates at least one of the following: a time domain resource of N second synchronization signals, a frequency domain resource of the N second synchronization signals, a sequence of the N second synchronization signals, or a random access configuration of a second cell.

In this manner, a synchronization signal of the first cell may include related information of a synchronization signal of the second cell, or include the random access configuration of the second cell. This helps the terminal obtain a related configuration for accessing the second cell, and reduce signaling overheads in the second cell.

The terminal device determines a first path loss based on the first synchronization signal, and determines a second path loss based on the N second synchronization signals, where the first path loss is greater than the second path loss.

In this manner, the terminal device sends the random access signal based on a synchronization signal corresponding to a smaller path loss, and the terminal device may send the random access signal at lower transmit power, so that power consumption of the terminal device can be reduced.

In an optional manner, the first synchronization signal and the N second synchronization signals have different spatial domain configurations.

In an optional manner, the random access configuration of the second cell includes at least one of the following: a candidate time domain resource of a random access signal, a candidate frequency domain resource of the random access signal, a code domain resource sequence of the random access signal, or candidate transmit power of the random access signal.

In an optional manner, a code domain resource includes a sequence.

In an optional manner, each synchronization signal in the N second synchronization signals carries a second physical cell identifier PCI.

In an optional manner, a time-frequency resource of the random access signal is determined based on the second PCI, or the time-frequency resource of the random access signal is determined based on the sequence of the N second synchronization signals.

In an optional manner, the first synchronization signal and the N second synchronization signals have a same center frequency.

In this manner, the terminal device may detect, on one frequency, two synchronization signals with different spatial domain configurations. In comparison with a case in which the terminal device performs detection on synchronization signals with different spatial domain configurations on different frequency bands, detection complexity of the terminal can be reduced.

In an optional manner, the terminal determines a third synchronization signal from the N second synchronization signals, and sends the random access signal based on the third synchronization signal.

In an optional manner, the terminal device sends second information in the second cell, where the second information indicates the third synchronization signal.

In an optional manner, the second PCI corresponds to the N second synchronization signals.

In an optional manner, the second cell is a proper subset of the first cell.

In an optional manner, the first synchronization signal is sent by a first network device, the N second synchronization signals are sent by a second network device, and a coverage area of the first network device includes a coverage area of the second network device, or the coverage area of the second network device is a proper subset of the coverage area of the first network device.

According to a second aspect, this application provides a communication method. The method may be performed by a first network device, or may be performed by a component (for example, a chip or a circuit) of the first network device. This is not limited herein. The method includes: The first network device sends a first synchronization signal of a first cell, and sends first information, where the first information indicates at least one of the following: a time domain resource of N second synchronization signals, a frequency domain resource of the N second synchronization signals, a sequence of the N second synchronization signals, or a random access configuration of a second cell.

In this manner, the first network device indicates, to a terminal device by using the first information, related information of the second synchronization signal or the random access configuration of the second cell, so that complexity of accessing the second cell by the terminal device is reduced. For example, complexity of performing second synchronization signal blind detection by the terminal device is reduced, or complexity of determining the random access configuration by the terminal device is reduced. Further, the first network device may configure, based on a specific requirement, a resource and/or a sequence of the second synchronization signal for access of the terminal device. Therefore, a requirement of the network device can be adapted, and communication flexibility can be improved.

The first synchronization signal corresponds to a first path loss, the N second synchronization signals correspond to a second path loss, and the first path loss is greater than the second path loss.

In an optional manner, the first synchronization signal and the N second synchronization signals have different spatial domain configurations.

In an optional manner, the random access configuration of the second cell includes at least one of the following: a candidate time domain resource of a random access signal, a candidate frequency domain resource of the random access signal, or candidate transmit power of the random access signal.

In an optional manner, the first synchronization signal and the N second synchronization signals have a same center frequency.

In an optional manner, the second cell is a proper subset of the first cell.

In an optional manner, the first synchronization signal is sent by the first network device, the N second synchronization signals are sent by a second network device, and a coverage area of the first network device includes a coverage area of the second network device, or the coverage area of the second network device is a proper subset of the coverage area of the first network device.

For beneficial effects of any one of the manners of the second aspect, refer to the descriptions in the first aspect. Details are not described herein again.

According to a third aspect, this application provides a communication method. The method may be performed by a second network device, or may be performed by a component (for example, a chip or a circuit) of the second network device. This is not limited herein. The method includes: The second network device sends N second synchronization signals, and receives a random access signal. A time-frequency resource of the N second synchronization signals or a sequence of the N second synchronization signals is determined based on first information, a time-frequency resource of scheduling information of the first information is determined based on a first synchronization signal, and the first synchronization signal and the N second synchronization signals have different spatial domain configurations.

The first synchronization signal corresponds to a first path loss, the N second synchronization signals correspond to a second path loss, and the first path loss is greater than the second path loss.

In an optional manner, a random access configuration of a second cell includes at least one of the following: a candidate time domain resource of the random access signal, a candidate frequency domain resource of the random access signal, or candidate transmit power of the random access signal.

In an optional manner, each second synchronization signal in the N second synchronization signals carries a second PCI.

In an optional manner, a time-frequency resource of the random access signal is determined based on the second PCI, or the time-frequency resource of the random access signal is determined based on the sequence of the N second synchronization signals.

In an optional manner, the second network device receives second information, where the second information indicates a third synchronization signal, and the third synchronization signal belongs to the N second synchronization signals.

In an optional manner, the random access signal is received from the terminal device based on the third synchronization signal in the N second synchronization signals.

In an optional manner, the second cell is a proper subset of a first cell.

In an optional manner, the first synchronization signal is sent by a first network device, the N second synchronization signals are sent by the second network device, and a coverage area of the first network device includes a coverage area of the second network device, or the coverage area of the second network device is a proper subset of the coverage area of the first network device.

For beneficial effects of any one of the manners of the third aspect, refer to the descriptions in the first aspect. Details are not described herein again.

According to a fourth aspect, a communication apparatus is provided. The communication apparatus may be the terminal device in the method embodiment provided in the first aspect, or a chip used in the terminal device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, through a logic circuit or by executing code instructions, the communication apparatus to perform the method performed by the terminal device in the foregoing method embodiments.

According to a fifth aspect, a communication apparatus is provided. The communication apparatus may be the first network device in the method embodiment provided in the second aspect, or a chip used in the first network device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, through a logic circuit or by executing code instructions, the communication apparatus to perform the method performed by the first network device in the foregoing method embodiments.

According to a sixth aspect, a communication apparatus is provided. The communication apparatus may be the second network device in the method embodiment provided in the third aspect, or may be a chip used in the second network device. The communication apparatus includes a processor and an interface circuit. The interface circuit is configured to receive a signal from a communication apparatus other than the communication apparatus and transmit the signal to the processor, or send a signal from the processor to a communication apparatus other than the communication apparatus. The processor enables, through a logic circuit or by executing code instructions, the communication apparatus to perform the method performed by the second network device in the foregoing method embodiments.

According to an unclaimed seventh aspect, this application provides a computer-readable storage medium. The computer-readable storage medium stores instructions. When the instructions are executed by a communication apparatus, the method performed by the terminal device in the first aspect is performed, or the method performed by the first network device in the second aspect is performed, or the method performed by the second network device in the third aspect is performed.

According to an eighth aspect, this application provides a computer program product. The computer program product includes a computer program. When the computer program is run, the method performed by the terminal device in the first aspect is performed, or the method performed by the first network device in the second aspect is performed, or the method performed by the second network device in the third aspect is performed.

According to an unclaimed ninth aspect, this application provides a chip system. The chip system includes a processor, configured to implement a function of the terminal device in the method in the first aspect, or configured to implement a function of the first network device in the method in the second aspect, or configured to implement a function of the second network device in the method in the third aspect. In a possible design, the chip system further includes a memory, configured to store program instructions and/or data. The chip system may include a chip, or may include a chip and another discrete component.

According to an unclaimed tenth aspect, this application provides a communication system, including at least one communication apparatus in the fourth aspect, at least one communication apparatus in the fifth aspect, and at least one communication apparatus in the sixth aspect.

According to an eleventh aspect, this application provides a communication method. The method includes: A first network device sends a first synchronization signal to a terminal, and sends first information to the terminal; a second network device sends N second synchronization signals to the terminal; and the terminal sends a random access signal to the second network device based on the N second synchronization signals. The first synchronization signal indicates at least one of the following: a time domain resource of the N second synchronization signals, a frequency domain resource of the N second synchronization signals, a sequence of the N second synchronization signals, or a random access configuration of a second cell.

### BRIEF DESCRIPTION OF DRAWINGS

FIG. 1 is a diagram of an architecture of a mobile communication system to which an embodiment of this application is applied;
FIG. 2 is a diagram of an SSB in time domain and frequency domain according to this application;
FIG. 3 is a schematic flowchart of a communication method according to this application;
FIG. 4 is a diagram of a communication scenario according to this application;
FIG. 5 is a schematic flowchart of another communication method according to this application;
FIG. 6 is a diagram of a communication apparatus according to this application; and
FIG. 7 is a diagram of another communication apparatus according to this application.

### DESCRIPTION OF EMBODIMENTS

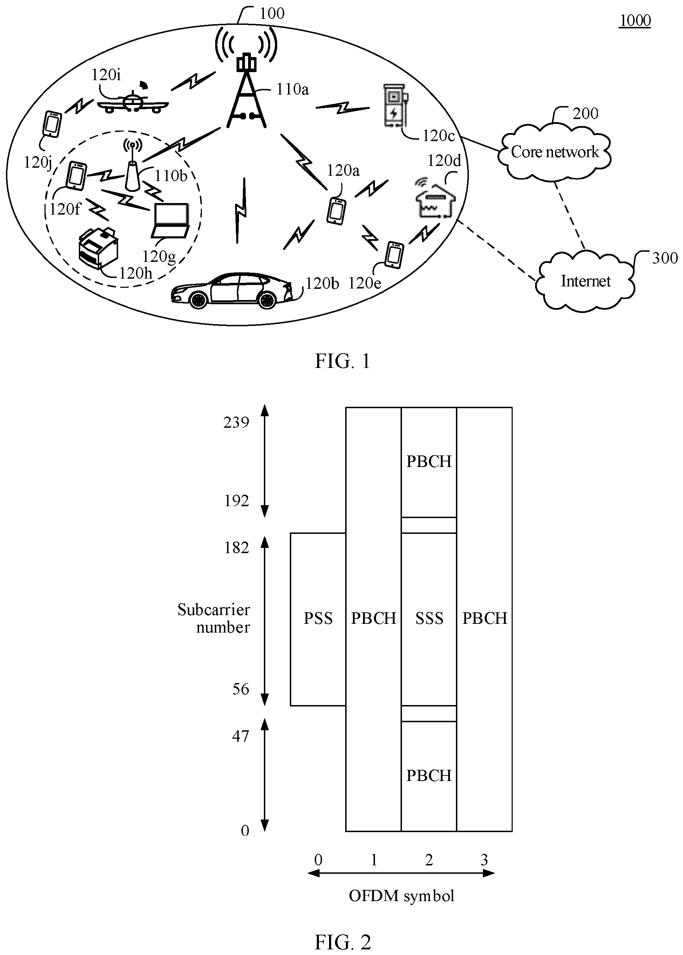

FIG. 1 is a diagram of an architecture of a communication system 1000 to which an embodiment of this application is applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. The access network device may be referred to as a network device for short. FIG. 1 is merely a diagram. The communication system may further include other network devices, for example, may further include a wireless relay device and a wireless backhaul device, which are not shown in FIG. 1.

The radio access network device, or the network device, may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like, or may be a module or unit that completes some functions of the base station, for example, may be a central unit (central unit, CU) or a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further completes some or all of functions of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used by the radio access network device are not limited in embodiments of this application. For ease of description, the following provides descriptions by using an example in which the radio access network device is a base station.

The terminal may also be referred to as a terminal device (terminal device), user equipment (user equipment, UE), a mobile station, a mobile terminal, or the like. The terminal may be a mobile phone, a tablet computer, a computer having a wireless transceiver function, a wearable device, a vehicle, an uncrewed aerial vehicle, a helicopter, an airplane, a ship, a robot, a robotic arm, a smart home device, a wireless modem (modem), a computing device, another processing device connected to a wireless modem, an augmented reality (augmented reality, AR) device, a virtual reality (virtual reality, VR) device, an artificial intelligence (artificial intelligence, AI) device, or the like. The terminal may alternatively be a subscriber unit (subscriber unit), a cellular phone (cellular phone), a smartphone (smartphone), a wireless data card, a personal digital assistant (personal digital assistant, PDA) computer, a tablet computer, a netbook computer, a handheld (handheld) device, a laptop computer (laptop computer), a cordless telephone (cordless phone), a wireless local loop (wireless local loop, WLL) station, a machine-type communication (machine-type communication, MTC) terminal, relay user equipment, or the like. The relay user equipment may be, for example, a residential gateway (residential gateway, RG). For ease of description, in this application, the devices mentioned above are collectively referred to as terminals.

The terminal may be widely used in various scenarios, for example, device-to-device (device-to-device, D2D), vehicle-to-everything (vehicle-to-everything, V2X) communication, machine-type communication (machine-type communication, MTC), internet of things (internet of things, IOT), virtual reality, augmented reality, industrial control, autonomous driving, telemedicine, a smart grid, smart furniture, smart office, smart wearable, smart transportation, and a smart city.

A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 via 120i, the terminal 120i is a base station. However, for the base station 110a, 120i is a terminal. In other words, communication between 110a and 120i is performed according to a radio air interface protocol. It is clear that communication between 110a and 120i may alternatively be performed according to an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base stations, or between the terminals may be performed based on a licensed spectrum, an unlicensed spectrum, or both the licensed spectrum and the unlicensed spectrum. Communication may be performed by using a spectrum below 6 gigahertz (gigahertz, GHz), a spectrum above 6 GHz, or both the spectrum below 6 GHz and the spectrum above 6 GHz. A spectrum resource used for wireless communication is not limited in embodiments of this application.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel.

The following explains and describes some nouns or terms in this application.

### 1. Synchronization signal block (synchronization signal block, SSB)

The SSB may include two parts: a synchronization signal (synchronization signal, SS) and a physical broadcast channel (physical broadcast channel, PBCH). The SS may include a primary synchronization signal (primary synchronization signal, PSS) and a secondary synchronization signal (secondary synchronization signal, SSS). Therefore, it may also be considered that the SSB includes three parts, in other words, the SSB includes the PSS, the SSS, and the PBCH. This is not limited. FIG. 2 is a diagram of an SSB in time domain and frequency domain.

In FIG. 2, the SSB may occupy four consecutive symbols in time domain, and may occupy 20 resource blocks (resource block, RB), namely, 240 subcarriers (subcarrier, SC) in frequency domain.

The SSB may be for implementing the following functions: (1) cell synchronization and master information block (master information block, MIB) obtaining; and (2) beam training on a base station side. The following provides a brief introduction.
(1) Cell synchronization and MIB obtaining: A PSS and an SSS in the SSB may carry a physical cell identifier (physical cell identifier, PCI), and a terminal obtains the PCIs by performing detection on the PSS and the SSS. In addition, a PBCH in the SSB may carry an SSB index (index). Each SSB index corresponds to a position at which the SSB is sent. The terminal may complete cell synchronization by performing detection on the SSB index and a moment at which the SSB is received. In addition, the PBCH in the SSB may carry a MIB. Therefore, the MIB may also be obtained based on the SSB.
(2) Beam training on a base station side: One SSB pattern (pattern) may include a plurality of SSB indexes, and different SSB indexes correspond to different transmit beams of a base station. The terminal may select, by performing detection on the SSB, a transmit beam corresponding to an SSB with good quality, to complete beam training. In addition, the terminal may also receive a same SSB by using a plurality of receive beams, to complete receive beam training on a terminal side. For ease of description, an example in which the SSB with good quality is an SSB 1, and the SSB 1 corresponds to a transmit beam 1 of the base station is for further description. Functions of the transmit beam 1 mainly include: (1) The terminal receives, at a position corresponding to the SSB 1, a system information block 1 (system information block 1, SIB 1) or paging (paging) sent by the base station by using the transmit beam 1, to improve coverage of the SIB 1 or the paging; (2) the terminal sends a physical random access channel (physical random access channel, PRACH) at the position corresponding to the SSB 1, and the base station may receive the PRACH by using the beam 1, to increase a probability of successful PRACH receiving; (3) and after the terminal completes initial access and establishes a radio resource control (radio resource control, RRC) connection, the base station may perform finer-grained beam training based on the beam 1, to reduce overheads of fine beam training.

Before detecting the SSB, the terminal generally cannot determine a specific time-frequency resource position of the SSB. In other words, the terminal needs to perform blind SSB detection. In frequency domain, a frequency domain interval, namely, a synchronization raster (synchronization raster), used for blind SSB detection is predefined, and is used by the terminal to perform SSB detection. The synchronization raster has different sizes in different frequency bands. The terminal may perform SSB detection one by one at an interval being the synchronization raster, to obtain information required for accessing a network. In time domain, a detection periodicity of the SSB may be defined. For example, the terminal considers by default that a sending periodicity of the SSB is 20 ms. Correspondingly, the base station also needs to continuously send SSBs for terminal detection. If the terminal does not detect the SSB, the terminal cannot receive the SIB 1 and send the PRACH subsequently, and cannot access the network.

### 2. System information block 1 SIB 1

A system information element is broadcast via a system information block. System information elements of a same type are combined in system information. A main function of the SIB 1 is to complete configuration on a primary cell (primary cell, PCell), so that a terminal in an idle (idle) state monitors a paging message, or a terminal completes uplink timing synchronization through random access, to enter a connected (connected) state.

The SIB 1 is generally carried on a physical downlink shared channel (physical downlink shared channel, PDSCH). Usually, the base station may indicate, to the terminal by using downlink control information (downlink control information, DCI), a time-frequency position and a transmission parameter of the PDSCH carrying the SIB 1. A candidate time domain position and a candidate frequency domain position of the DCI may be indicated by using a MIB. For example, the MIB includes a 4-bit (bit) control resource set 0 (control resource set zero, CORESET 0) and a 4-bit common search space 0 (common search space zero, CSS 0), where the CORESET 0 indicates a candidate frequency domain position of DCI for scheduling the SIB 1, and the CSS 0 indicates a candidate time domain position of the DCI for scheduling the SIB 1. The base station may send, by using a beam that is the same as a beam for sending an SSB, a SIB 1 corresponding to the SSB. Correspondingly, when receiving the SIB 1, the terminal may receive, by using a beam that is the same as a beam for receiving the SSB, the SIB 1 corresponding to the SSB. The SIB 1 corresponding to the SSB represents that a MIB in the SSB indicates a frequency domain position and a time domain position of DCI for scheduling the SIB 1.

In a possible understanding, the SIB 1 may be considered as remaining minimum system information (remaining minimum system information, RMSI), or the SIB 1 may be considered as a 1^{st} sent system information block after the MIB, or the SIB 1 may be considered as a system information block that includes time-frequency resource indication information of a random access channel (random access channel, RACH), or the SIB 1 may be considered as information carried on a PDSCH scheduled by using a physical downlink control channel (physical downlink control channel, PDCCH) determined based on the CORESET 0 and the CSS 0.

It may be understood that, the foregoing descriptions related to the SIB 1 and the SSB are merely examples for description, and do not limit the protection scope of embodiments of this application.

It may be further understood that, in embodiments of this application, the RACH and the PRACH are sometimes alternately used, and represent a same meaning without emphasizing a difference.

### 3. Random access (random access, RA) signal

Random access is a necessary process for establishing a radio link between a terminal device and a base station. In a random access procedure, the terminal device sends an uplink signal, to establish uplink synchronization with the base station. The uplink signal sent by the terminal in the random access procedure may be understood as a random access signal, for example, a RACH sent by the terminal device.

### 4. Spatial domain configuration

The spatial domain configuration may be understood as a configuration of an antenna element or an antenna port, including but not limited to: a phase of the antenna element or an analog channel, and a weight of the analog channel or a digital channel, where the weight may include a phase weight and an amplitude weight. The spatial domain configuration may also be understood as a configuration of a transmit/receive matrix, a configuration of a transmit/receive beam, or the like.

The spatial domain configuration may be a spatial filtering configuration, a spatial filter configuration, or the like. In this application, a spatial domain configuration of a synchronization signal may be a pattern configuration of an antenna for sending the synchronization signal, or a configuration of a spatial domain filter for sending the synchronization signal.

### 5. Path loss

When an electromagnetic wave signal is propagated in space, signal energy attenuates as a transmission distance increases. In a communication system, the path loss may represent attenuation experienced by a signal from a transmitting end to a receiving end. Path losses may be different due to distances between the transmitting end and the receiving end or different carrier frequency bands.

It can be learned from the foregoing descriptions that, when accessing a base station, a terminal needs to first perform detection on an SSB and a SIB 1, to obtain related information for sending a random access signal. The SSB and the SIB 1 are cell-level. To be specific, the base station sends the SSB and the SIB 1 in each cell in an operating state. Provided that the cell needs to provide a radio access service for the terminal, the base station needs to send the SSB and the SIB 1 of the cell. When there are a plurality of cells in a network, one or more base stations corresponding to the plurality of cells send a plurality of SSBs and SIBs 1. Consequently, overall overheads of the system are high.

Therefore, this application provides a communication method, to reduce signaling overheads of a base station and ensure that a terminal normally accesses a network. In this way, energy of the base station is saved.

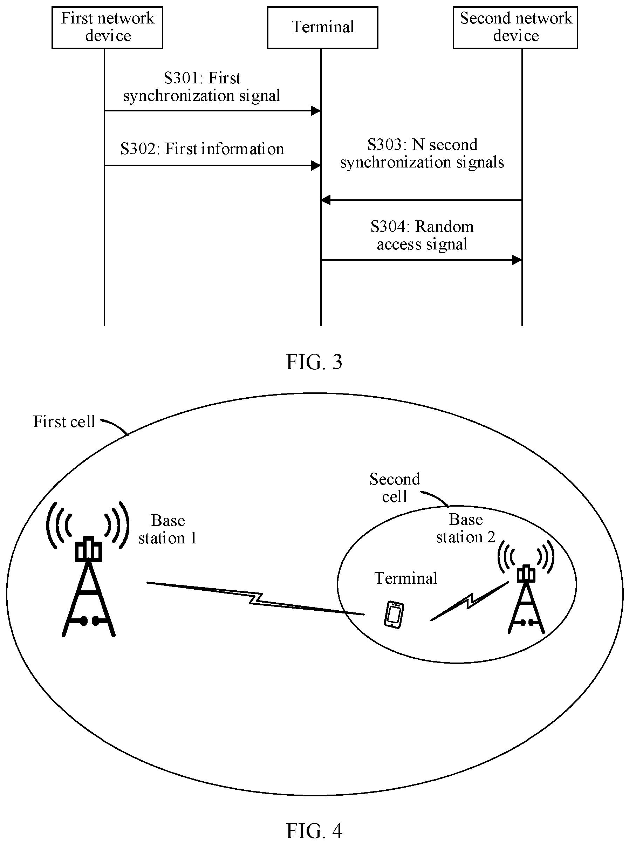

Based on the network architecture provided in FIG. 1, the following describes in detail a communication method in this application with reference to FIG. 3.

S301: A first network device sends a first synchronization signal of a first cell to a terminal device. The first network device is briefly referred to as a base station 1 below. S301 may also be understood as that the base station 1 sends the first synchronization signal to the terminal device in the first cell.

Specifically, the first synchronization signal is used by the terminal to perform cell synchronization and MIB obtaining. For specific content of the cell synchronization and the MIB obtaining, refer to related explanations of the SSB in the foregoing term explanation part.

In an optional manner, the first synchronization signal carries a first PCI. The first PCI is a PCI of the first cell. In other words, the first PCI identifies the first cell.

In another optional manner, a plurality of sequences and a plurality of PCIs satisfy a first relationship. The terminal device may determine the first PCI based on a sequence of the first synchronization signal and the first relationship. The first relationship may be predefined, or may be indicated by using signaling. For example, the first relationship may be indicated by using first information. In this manner, it may also be understood as that the first PCI is carried by using the sequence used for the first synchronization signal. S302: The base station 1 sends the first information to the terminal, and correspondingly, the terminal receives the first information.

S302 may also be understood as that the base station 1 sends the first information to the terminal in the first cell.

Specifically, the first information is used by the terminal to receive N second synchronization signals, and/or the first information is used by the terminal to obtain a random access configuration of a second cell.

In an optional manner, the first information indicates at least one of the following:
a time domain resource of the N second synchronization signals, a frequency domain resource of the N second synchronization signals, a sequence of the N second synchronization signals, or the random access configuration of the second cell.

Optionally, the random access configuration of the second cell may include at least one of the following:
a candidate time domain resource of a random access signal, a candidate frequency domain resource of the random access signal, a candidate code domain configuration of the random access signal, or candidate transmit power of the random access signal. Optionally, a code domain configuration may be a sequence.

In an optional manner, the random access configuration includes a parameter P1, where P1 is used to determine transmit power of the random access signal.

For example, power for sending the random access signal by the terminal device may be determined based on P1 and a path loss. Optionally, the path loss may be obtained through measurement based on a second synchronization signal. P1, the path loss, and the transmit power of the random access signal satisfy Formula (1): $P_rach = min \left\{P_max, P1+PL\right\} \left(dBm\right)$

P_max represents maximum transmit power of the terminal, and PL represents the path loss measured by the terminal. In Formula (1), each parameter is in a unit of dBm. Conversion between dBm and watt (w) may be performed by using Formula (2): $x \left(dBm\right) = 10 * log 10 \left(P/0.001\right) ,$ where P is in a unit of watt.

Optionally, P1 is target receive power of the random access signal. In an optional manner, P1 is applicable to any base station. In a scenario of a plurality of base stations, P1 may be understood as target receive power of the random access signal of each base station. When the terminal communicates with any one of the plurality of base stations, that P1 is used as target receive power of the random access signal of a target base station is applicable. In another optional manner, P1 is target receive power of the random access signal of a target base station to which the terminal device sends the random access signal. For example, when the terminal sends the random access signal to a base station A, P1 is target receive power of the random access signal of the base station A.

In an optional manner, the first information is a SIB 1.

S303: A second network device sends the N second synchronization signals to the terminal. Correspondingly, the terminal receives the N second synchronization signals.

Specifically, the second network device is briefly referred to as a base station 2 below. It may also be understood as that the base station 2 sends the N second synchronization signals to the terminal in the second cell.

In S303, a coverage area of the first cell may include a coverage area of the second cell. In other words, the coverage area of the second cell is a proper subset of the coverage area of the first cell. For example, in FIG. 4, the base station 1 corresponds to the first cell, the base station 2 corresponds to the second cell, and the coverage area of the first cell includes the coverage area of the second cell.

It should be noted that one base station 2 and one second cell are used as an example in FIG. 4. However, in this application, there may be a plurality of second cells, and there may also be a plurality of base stations 2.

In an optional manner, the first information further indicates a first time window. The first time window is a time window in which the terminal performs detection on a synchronization signal in the second cell. In other words, the first time window is a time window in which the terminal receives the N second synchronization signals. In this manner, that the terminal receives the N second synchronization signals in S303 may be replaced with that the terminal receives the N second synchronization signals in the first time window.

Optionally, a start position of the first time window is determined based on the first synchronization signal. In the method, the terminal device completes downlink synchronization based on the first synchronization signal, and determines the start position of the first time window. Because the first synchronization signal and the second synchronization signal may be from different base stations, time synchronization of the two base stations is different. In this case, if the terminal receives the N second synchronization signals on a fixed time domain resource, the N second synchronization signals may not be detected, or efficiency of receiving the N second synchronization signals is low. Therefore, the first time window is configured, so that the terminal device performs detection on the second synchronization signals in the first time window. This can improve the efficiency of receiving the N second synchronization signals.

Specifically, the N second synchronization signals and the first synchronization signal have different spatial domain configurations.

For example, in FIG. 4, the N second synchronization signals and the first synchronization signals are respectively sent by different base stations. Because geographical locations of different base stations are different, spatial domain configurations of synchronization signals sent by different base stations are also different.

In an optional manner, the first synchronization signal and the N second synchronization signals have a same center frequency. Further, optionally, the first synchronization signal and the N second synchronization signals have a same frequency domain position, or bandwidth parts (bandwidth part, BWP) determined by the terminal based on the first synchronization signal and the N second synchronization signals are the same. In other words, if a BWP determined by the terminal based on the first synchronization signal is a first BWP, a BWP determined by the terminal based on the N second synchronization signals is also the first BWP.

In an optional manner, each second synchronization signal in the N second synchronization signals carries a second PCI. The second PCI is a PCI of the second cell. In other words, the second PCI identifies the second cell. The first synchronization signal carries the first PCI, in other words, the first synchronization signal and the N second synchronization signals respectively carry different PCIs.

In another optional manner, the second PCI is associated with the sequence of the N second synchronization signals. In other words, the sequence of the N second synchronization signals and the second PCI satisfy a second relationship, and the terminal determines the second PCI based on the sequence of the N synchronization signals and the second relationship.

Further, optionally, the second relationship may be obtained by using the first information.

S304: The terminal sends the random access signal in the second cell based on the N second synchronization signals.

Optionally, the N second synchronization signals are used by the terminal to perform beam training or initial access. Descriptions are separately provided below.

In an optional manner, the terminal may perform beam training based on the N second synchronization signals, to obtain a beam with best quality for communication with the base station 2. For a process in which the terminal performs beam training based on the N second synchronization signals, refer to descriptions about the beam training in the foregoing term explanation part. Details are not described herein again.

In an optional manner, the N second synchronization signals have different indexes. In other words, the N second synchronization signals respectively correspond to N indexes. The N indexes correspond to N sequences. For example, N=2 represents that there are two second synchronization signals, where indexes of the two second synchronization signals are respectively 0 and 1. A sequence of a second synchronization signal whose index is 0 is a first sequence, and a sequence of a second synchronization signal whose index is 1 is a second sequence.

In an optional manner, the N synchronization signals are used for initial access. The terminal may determine at least one of a time domain resource of the random access signal, a frequency domain resource of the random access signal, a code domain resource of the random access signal, a spatial domain configuration of the random access signal, or the transmit power of the random access signal based on the N second synchronization signals. The code domain resource may be a sequence.

For example, the N second synchronization signals carry the second PCI, and the second PCI and a time-frequency resource used by the terminal to send the random access signal satisfy a predefined relationship. For another example, the sequence of the N second synchronization signals and a time-frequency resource used by the terminal to send the random access signal satisfy a predefined relationship. The terminal may learn of, by using the sequence of the N synchronization signals or the second PCI, the time-frequency resource for sending the random access signal. In S303, the first information may indicate the random access configuration of the second cell. Therefore, in this manner, the first information indicates at least one of the candidate time domain resource, the candidate frequency domain resource, the candidate code domain resource, or the candidate transmit power of the random access signal. The terminal determines at least one of an actual time domain resource, an actual frequency domain resource, an actual code domain resource, or actual transmit power of the random access signal based on the N second synchronization signals.

In Manner 1, an example in which the terminal determines the time-frequency resource of the random access signal based on the N second synchronization signals is used for detailed description.

Manner 1: The terminal device determines a resource set based on the first information. The resource set includes X resource subsets, and X is a positive integer. Each resource subset includes one or more first resources. Each first resource may include one or more of a time domain resource, a frequency domain resource, or a code domain resource of the random access signal. Optionally, the code domain resource may be a sequence.

Each resource subset in the X resource subsets corresponds to one sequence or one PCI. The terminal determines a first resource subset from the X resource subsets based on the sequence of the N second synchronization signals or the PCI carried in the N second synchronization signals. Further, the first resource subset includes a plurality of first resources. The terminal may determine a first resource from the first resource subset according to a specific rule, or the terminal may select any first resource from the first resource subset. A time domain resource, a frequency domain resource, or a code domain resource included in the first resource are the time domain resource, the frequency domain resource, or the code domain resource used by the terminal to send the random access signal.

In this manner, a resource of the random access signal of the second cell may be determined by using the sequence or the PCI of the second synchronization signal, and does not need to be independently notified by using other signaling. In a scenario in which there are a plurality of second cells, a resource of a random access signal of each second cell does not need to be independently notified. In this way, signaling overheads of the base station are reduced.

In an optional embodiment, that the terminal sends the random access signal in the second cell based on the N second synchronization signals in S304 may specifically include that the terminal determines a third synchronization signal from the N second synchronization signals, and sends the random access signal based on the third synchronization signal.

Specifically, the terminal may determine at least one of the time domain resource of the random access signal, the frequency domain resource of the random access signal, the code domain resource of the random access signal, the spatial domain configuration of the random access signal, or the transmit power of the random access signal based on the third synchronization signal.

In an optional manner, the terminal may determine the spatial domain configuration of the random access signal based on the third synchronization signal. Specifically, the spatial domain configuration used by the terminal to send the random access signal is the same as a spatial domain configuration used by the terminal to receive the second synchronization signal.

In an optional manner, that the terminal determines the transmit power of the random access signal based on the third synchronization signal may be specifically that the terminal obtains, based on a path loss measured by using the third synchronization signal, the power for sending the random access signal by the terminal. For details, refer to the method for determining the random signal transmit power in step S302. Details are not described herein again.

In an optional manner, for determining, by the terminal, the time-frequency resource of the random access signal based on the third synchronization signal, refer to Manner 1 in S304. In Manner 2, that the terminal determines the time-frequency resource of the random access signal based on the third synchronization signal in the N second synchronization signals in the manner in S304 is described in detail with reference to Manner 1.

Manner 2: The terminal device determines a resource set based on the first information. The resource set includes X resource subsets, and X is a positive integer. Each resource subset includes one or more first resources. Each first resource may include one or more of a time domain resource, a frequency domain resource, or a code domain resource of the random access signal. Optionally, the code domain resource may be a sequence.

Each resource subset in the X resource subsets corresponds to a plurality of sequences. The terminal determines a first resource subset from the X resource subsets based on the sequence of the N second synchronization signals. Further, the first resource subset includes a plurality of first resources, and the plurality of first resources respectively correspond to sequences of the N synchronization signals. The terminal selects, from the plurality of first resources based on a sequence of the third synchronization signal in the N synchronization signals, a first resource corresponding to the sequence of the third synchronization signal, and sends the random access signal by using the first resource corresponding to the sequence of the third synchronization signal.

In Manner 1, the terminal determines related information of the random access signal at a granularity of a resource subset. In Manner 2, the terminal determines related information of the random access signal at a granularity of a resource in a resource subset. The terminal may determine the related information of the random access signal at a finer granularity. When there are a plurality of terminals in the second cell, different terminals select resources of random access signals at a finer granularity, so that a resource conflict can be reduced.

In an optional manner, the method shown in FIG. 3 further includes S305: The terminal sends second information in the second cell, where the second information indicates the third synchronization signal.

In the method shown in FIG. 3, the base station 1 sends the first synchronization signal and the first information, for the terminal to receive the second synchronization signal or the random access configuration of the second cell. The base station 2 sends the N synchronization signals, and the terminal may send the random access signal based on the N synchronization signals sent by the base station 2, to access the network. For the base station 1 and the base station 2, because the terminal may send the random access signal based on the synchronization signal from the base station 2, the base station 2 does not need to send the first information to the terminal, so that overall power consumption of the base station is reduced.

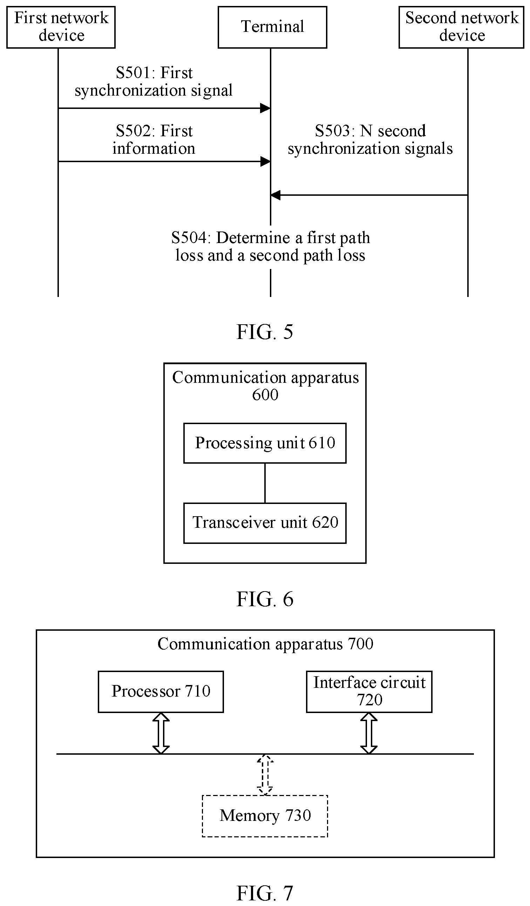

FIG. 5 is a schematic flowchart of another embodiment according to this application. The following describes in detail with reference to FIG. 5.

S501: A terminal device receives a first synchronization signal in a first cell.

Optionally, the first synchronization signal of the first cell is sent by a first network device, and the first network device is briefly referred to as a base station 1 below.

For specific descriptions of the first synchronization signal, refer to the descriptions in step S301. Details are not described herein again.

S502: The terminal receives first information in the first cell.

Optionally, the base station 1 sends the first information in the first cell, and the terminal receives the first information in the first cell from the base station 1.

For specific descriptions of the first information, refer to the descriptions in step S302. Details are not described herein again.

S503: The terminal receives N second synchronization signals in a second cell.

In an optional manner, a second network device sends the N second synchronization signals to the terminal in the second cell. The second network device is briefly referred to as a base station 2 below.

For specific descriptions of the N second synchronization signals, refer to the descriptions in step S302. Details are not described herein again.

S504: The terminal determines a first path loss based on the first synchronization signal, and the terminal determines a second path loss based on the N second synchronization signals.

S505: When the first path loss is less than the second path loss, the terminal sends a random access signal in the first cell. When the first path loss is greater than the second path loss, the terminal sends the random access signal in the second cell.

Specifically, the first path loss may be understood as a path loss of communication between the terminal and the base station 1, and the second path loss may be understood as a path loss of communication between the terminal and the base station 2.

With reference to the scenario shown in FIG. 4, that the terminal sends the random access signal in the first cell may also be understood as that the terminal sends the random access signal to the base station 1 in the first cell, and that the terminal sends the random access signal in the second cell may also be understood as that the terminal sends the random access signal to the base station 2 in the second cell.

In the method shown in FIG. 5, the base station 1 sends the first synchronization signal and the first information, for the terminal to receive the second synchronization signal or a random access configuration of the second cell. The base station 2 sends the N synchronization signals. The terminal selects a base station with a small path loss to send the random access signal, to access a network. For the base station 1 and the base station 2, compared with the base station 1, the base station 2 does not need to send the first information to the terminal, so that overall power consumption of the base station is reduced. For the terminal, the terminal selects the base station with a small path loss to send the random access signal, which means that the terminal device sends the random access signal at low power, and in this case, the base station can still detect the random access signal. Therefore, this helps the terminal device save energy.

It may be understood that, to implement functions in the foregoing embodiments, the base station and the terminal include corresponding hardware structures and/or software modules for performing the functions. A person skilled in the art should be easily aware that, in combination with the units and the method steps in the examples described in embodiments disclosed in this application, this application can be implemented by hardware or a combination of hardware and computer software. Whether a function is performed by hardware or hardware driven by computer software depends on particular application scenarios and design constraint conditions of the technical solutions.

FIG. 6 and FIG. 7 are diagrams of structures of possible communication apparatuses according to embodiments of this application. These communication apparatuses may be configured to implement the functions of the terminal or the base station in the foregoing method embodiments. Therefore, beneficial effects of foregoing method embodiments can also be achieved. In embodiments of this application, the communication apparatus may be one of the terminals 120a-120j shown in FIG. 1, or may be the base station base station 110a or 110b shown in FIG. 1, or may be a module (for example, a chip) used in the terminal or the base station.

As shown in FIG. 6, a communication apparatus 600 includes a processing unit 610 and a transceiver unit 620. The communication apparatus 600 is configured to implement the functions of the terminal or the base station in the method embodiment shown in FIG. 3 or FIG. 5.

When the communication apparatus 600 is configured to implement the functions of the terminal in the method embodiment shown in FIG. 3 or FIG. 5, the transceiver unit 620 is configured to receive a first synchronization signal, first information, and N second synchronization signals, and the transceiver unit 620 is further configured to send a random access signal. The processing unit 610 is configured to control, based on the N second synchronization signals, the transceiver unit 620 to send a configuration of the random access signal.

In an optional manner, the transceiver unit 620 is further configured to send second information, where the second information indicates a third synchronization signal in the N synchronization signals.

For more detailed descriptions of the processing unit 610 and the transceiver unit 620, directly refer to related descriptions in the method embodiment shown in FIG. 3 or FIG. 5. Details are not described herein again.

When the communication apparatus 600 is configured to implement the functions of the base station 1 in the method embodiment shown in FIG. 3 or FIG. 5, the transceiver unit 620 is configured to send a first synchronization signal. The processing unit 610 may be optional. When the communication apparatus 600 includes the processing unit 610, in an optional manner, the processing unit 610 may be configured to determine the first synchronization signal.

When the communication apparatus 600 is configured to implement the functions of the base station 2 in the method embodiment shown in FIG. 3 or FIG. 5, the transceiver unit 620 is configured to send N second synchronization signals and receive a random access signal. In an optional manner, the transceiver unit 620 is further configured to receive second information, where the second information indicates a third synchronization signal in the N synchronization signals. The processing unit 610 may be optional. When the communication apparatus 600 includes the processing unit 610, in an optional manner, the processing unit 610 is configured to determine the N second synchronization signals.

For more detailed descriptions of the processing unit 610 and the transceiver unit 620, directly refer to related descriptions in the method embodiment shown in FIG. 3 or FIG. 5. Details are not described herein again.

As shown in FIG. 7, a communication apparatus 700 includes a processor 710 and an interface circuit 720. The processor 710 and the interface circuit 720 are coupled to each other. It may be understood that the interface circuit 720 may be a transceiver or an input/output interface. Optionally, the communication apparatus 700 may further include a memory 730, configured to: store instructions to be executed by the processor 710, or store input data required by the processor 710 to run instructions, or store data generated after the processor 710 runs instructions.

When the communication apparatus 700 is configured to implement the method shown in FIG. 3 or FIG. 5, the processor 710 is configured to implement a function of the processing unit 610, and the interface circuit 720 is configured to implement a function of the transceiver unit 620.

When the foregoing communication apparatus is a chip used in a terminal, the chip in the terminal implements the functions of the terminal in the foregoing method embodiments. The chip in the terminal receives information from another module (for example, a radio frequency module or an antenna) in the terminal, where the information is sent by a base station to the terminal. Alternatively, the chip in the terminal sends information to another module (for example, a radio frequency module or an antenna) in the terminal, where the information is sent by the terminal to the base station.

When the foregoing communication apparatus is a module used in a base station, the module in the base station implements the functions of the base station in the foregoing method embodiments. The module in the base station receives information from another module (for example, a radio frequency module or an antenna) in the base station, where the information is sent by a terminal to the base station. Alternatively, the module in the base station sends information to another module (for example, a radio frequency module or an antenna) in the base station, where the information is sent by the base station to the terminal. The module in the base station herein may be a baseband chip in the base station, or may be a DU or another module. The DU herein may be a DU in an open radio access network (open radio access network, O-RAN) architecture.

It may be understood that, the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that can be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. Alternatively, the processor and the storage medium may exist in a base station or a terminal as discrete components.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or instructions are loaded and executed on a computer, the procedures or functions in embodiments of this application are all or partially performed. The computer may be a general-purpose computer, a dedicated computer, a computer network, a network device, user equipment, or another programmable apparatus. The computer programs or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, or may be an optical medium, for example, a digital video disc, or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, "at least one" means one or more, and "a plurality of" means two or more. "And/or" describes an association relationship between associated objects and represents that three relationships may exist. For example, A and/or B may represent the following three cases: Only A exists, both A and B exist, and only B exists, where A and B each may be singular or plural. In the text descriptions of this application, the character "/" generally represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A random access method, comprising:
Receiving (S501) a first synchronization signal in a first cell;
Receiving (S502) first information in the first cell based on the first synchronization signal, wherein the first information indicates at least one of the following: a time domain resource of N second synchronization signals, a frequency domain resource of the N second synchronization signals, or a sequence of the N second synchronization signals; or the first information indicates a random access configuration of a second cell, and N is a positive integer;
Receiving (S503) the N second synchronization signals in the second cell; and
Sending a random access signal in the second cell based on the N second synchronization signals or the random access configuration of the second cell,
determining (S504) a first path loss based on the first synchronization signal; and
determining (S504) a second path loss based on the N second synchronization signals, wherein the first path loss is greater than the second path loss.

2. The method according to claim 1, wherein the first synchronization signal and the N second synchronization signals have different spatial domain configurations.

3. The method according to claim 1 or 2, wherein the random access configuration of the second cell comprises at least one of the following:
a candidate time domain resource of the random access signal, a candidate frequency domain resource of the random access signal, a candidate code domain resource of the random access signal, or candidate transmit power information of the random access signal.

4. The method according to any one of claims 1 to 3, wherein each synchronization signal in the N second synchronization signals carries a second physical cell identifier PCI, and a time-frequency resource of the random access signal is determined based on the second PCI; or
the time-frequency resource of the random access signal is determined based on the sequence of the N second synchronization signals.

5. The method according to any one of claims 1 to 4, wherein the first synchronization signal and the N second synchronization signals have a same center frequency.

6. The method according to any one of claims 1 to 5, wherein the sending a random access signal based on the N second synchronization signals comprises:
determining a third synchronization signal, wherein the third synchronization signal belongs to the N second synchronization signals; and
sending the random access signal based on the third synchronization signal.

7. A communication method, comprising:
Sending (S501) a first synchronization signal in a first cell; and
Sending (S502) first information in the first cell, wherein the first information indicates at least one of the following: a time domain resource of N second synchronization signals, a frequency domain resource of the N second synchronization signals, or a sequence of the N second synchronization signals; or the first information indicates a random access configuration of a second cell, and N is a positive integer,
wherein the first synchronization signal corresponds to a first path loss, the N second synchronization signals correspond to a second path loss, and the first path loss is greater than the second path loss.

8. The method according to claim 7, wherein the first synchronization signal and the N second synchronization signals have different spatial domain configurations.

9. The method according to any one of claims 7 to 8, wherein the first synchronization signal and the N second synchronization signals have a same center frequency.

10. A communication method, comprising:
Sending (S503) N second synchronization signals in a second cell; and
Receiving a random access signal, wherein a time-frequency resource of the random access signal is determined based on the N second synchronization signals, a time-frequency resource of the N second synchronization signals or a sequence of the N second synchronization signals is determined based on first information, a time-frequency resource of scheduling information of the first information is determined based on a first synchronization signal, the first synchronization signal and the N second synchronization signals have different spatial domain configurations, and N is a positive integer,
wherein the first synchronization signal corresponds to a first path loss, the N second synchronization signals correspond to a second path loss, and the first path loss is greater than the second path loss.

11. The method according to claim 10, wherein
each second synchronization signal in the N second synchronization signals carries a second PCI, and the time-frequency resource of the random access signal is determined based on the second PCI; or
the time-frequency resource of the random access signal is determined based on the sequence of the N second synchronization signals.

12. The method according to any one of claims 10 or 11, wherein the first synchronization signal and the N second synchronization signals have a same center frequency.

13. The method according to any one of claims 10 to 12, wherein the receiving the random access signal from a terminal device comprises:
receiving the random access signal from the terminal device based on a third synchronization signal in the N second synchronization signals.

14. A communication apparatus (600), wherein the communication apparatus (600) is configured to perform the method according to any one of claims 1 to 6, or the communication apparatus (600) is configured to perform the method according to any one of claims 7 to 9, or the communication apparatus (600) is configured to perform the method according to any one of claims 10 to 13.

15. A computer program product, wherein the computer program product comprises a computer program, and when the computer program is run, the method according to any one of claims 1 to 6, claims 7 to 9, or claims 10 to 13 is performed.

## Patentansprüche

1. Direktzugriffsverfahren, umfassend:
Empfangen (S501) eines ersten Synchronisationssignals in einer ersten Zelle;
Empfangen (S502) von ersten Informationen in der ersten Zelle basierend auf dem ersten Synchronisationssignal, wobei die ersten Informationen mindestens eine der Folgenden anzeigen: eine Zeitbereichsressource von N zweiten Synchronisationssignalen, eine Frequenzbereichsressource der N zweiten Synchronisationssignale oder eine Sequenz der N zweiten Synchronisationssignale; oder wobei die ersten Informationen eine Direktzugriffskonfiguration einer zweiten Zelle anzeigen und wobei N eine positive ganze Zahl ist;
Empfangen (S503) der N zweiten Synchronisationssignale in der zweiten Zelle; und
Senden eines Direktzugriffssignals in der zweiten Zelle basierend auf den N zweiten Synchronisationssignalen oder der Direktzugriffskonfiguration der zweiten Zelle,
Ermitteln (S504) eines ersten Pfadverlusts basierend auf dem ersten Synchronisationssignal; und
Ermitteln (S504) eines zweiten Pfadverlusts basierend auf den N zweiten Synchronisationssignalen, wobei der erste Pfadverlust größer als der zweite Pfadverlust ist.

2. Verfahren nach Anspruch 1, wobei das erste Synchronisationssignal und die N zweiten Synchronisationssignale unterschiedliche räumliche Bereichskonfigurationen aufweisen.

3. Verfahren nach Anspruch 1 oder 2, wobei die Direktzugriffskonfiguration der zweiten Zelle mindestens eine der Folgenden umfasst:
eine Kandidatenzeitbereichsressource des Direktzugriffssignals, eine Kandidatenfrequenzbereichsressource des Direktzugriffssignals, eine Kandidatencodebereichsressource des Direktzugriffssignals oder Kandidatensendeleistungsinformationen des Direktzugriffssignals.

4. Verfahren nach einem der Ansprüche 1 bis 3, wobei jedes Synchronisationssignal in den N zweiten Synchronisationssignalen eine zweite physische Zellenkennung PCI mitführt und wobei eine Zeit-Frequenz-Ressource des Direktzugriffssignals basierend auf der zweiten PCI ermittelt wird; oder
wobei die Zeit-Frequenz-Ressource des Direktzugriffssignals basierend auf der Sequenz der N zweiten Synchronisationssignale ermittelt wird.

5. Verfahren nach einem der Ansprüche 1 bis 4, wobei das erste Synchronisationssignal und die N zweiten Synchronisationssignale eine gleiche Mittenfrequenz aufweisen.

6. Verfahren nach einem der Ansprüche 1 bis 5, wobei das Senden eines Direktzugriffssignals basierend auf den N zweiten Synchronisationssignalen umfasst:
Ermitteln eines dritten Synchronisationssignals, wobei das dritte Synchronisationssignal zu den N zweiten Synchronisationssignalen gehört; und
Senden des Direktzugriffssignals basierend auf dem dritten Synchronisationssignal.

7. Kommunikationsverfahren, umfassend:
Senden (S501) eines ersten Synchronisationssignals in einer ersten Zelle; und
Senden (S502) von ersten Informationen in der ersten Zelle, wobei die ersten Informationen mindestens eine der Folgenden anzeigen: eine Zeitbereichsressource von N zweiten Synchronisationssignalen, eine Frequenzbereichsressource der N zweiten Synchronisationssignale oder eine Sequenz der N zweiten Synchronisationssignale; oder wobei die ersten Informationen eine Direktzugriffskonfiguration einer zweiten Zelle anzeigen und wobei N eine positive ganze Zahl ist,
wobei das erste Synchronisationssignal einem ersten Pfadverlust entspricht, wobei die N zweiten Synchronisationssignale einem zweiten Pfadverlust entsprechen und wobei der erste Pfadverlust größer als der zweite Pfadverlust ist.

8. Verfahren nach Anspruch 7, wobei das erste Synchronisationssignal und die N zweiten Synchronisationssignale unterschiedliche räumliche Bereichskonfigurationen aufweisen.

9. Verfahren nach einem der Ansprüche 7 bis 8, wobei das erste Synchronisationssignal und die N zweiten Synchronisationssignale eine gleiche Mittenfrequenz aufweisen.

10. Kommunikationsverfahren, umfassend:
Senden (S503) von N zweiten Synchronisationssignalen in einer zweiten Zelle; und
Empfangen eines Direktzugriffssignals, wobei eine Zeit-Frequenz-Ressource des Direktzugriffssignals basierend auf den N zweiten Synchronisationssignalen ermittelt wird, wobei eine Zeit-Frequenz-Ressource der N zweiten Synchronisationssignale oder eine Sequenz der N zweiten Synchronisationssignale basierend auf ersten Informationen ermittelt wird, wobei eine Zeit-Frequenz-Ressource von Planungsinformationen der ersten Informationen basierend auf einem ersten Synchronisationssignal ermittelt wird, wobei das erste Synchronisationssignal und die N zweiten Synchronisationssignale unterschiedliche räumliche Bereichskonfigurationen aufweisen, und wobei N eine positive ganze Zahl ist,
wobei das erste Synchronisationssignal einem ersten Pfadverlust entspricht, wobei die N zweiten Synchronisationssignale einem zweiten Pfadverlust entsprechen und wobei der erste Pfadverlust größer als der zweite Pfadverlust ist.

11. Verfahren nach Anspruch 10, wobei
jedes zweite Synchronisationssignal in den N zweiten Synchronisationssignalen eine zweite PCI mitführt, und wobei die Zeit-Frequenz-Ressource des Direktzugriffssignals basierend auf der zweiten PCI ermittelt wird; oder
wobei die Zeit-Frequenz-Ressource des Direktzugriffssignals basierend auf der Sequenz der N zweiten Synchronisationssignale ermittelt wird.

12. Verfahren nach einem der Ansprüche 10 oder 11, wobei das erste Synchronisationssignal und die N zweiten Synchronisationssignale eine gleiche Mittenfrequenz aufweisen.

13. Verfahren nach einem der Ansprüche 10 bis 12, wobei das Empfangen des Direktzugriffssignals von einer Endgerätevorrichtung umfasst:
Empfangen des Direktzugriffssignals von der Endgerätevorrichtung basierend auf einem dritten Synchronisationssignal in den N zweiten Synchronisationssignalen.

14. Kommunikationseinrichtung (600), wobei die Kommunikationseinrichtung (600) konfiguriert ist, um das Verfahren nach einem der Ansprüche 1 bis 6 durchzuführen, oder wobei die Kommunikationseinrichtung (600) konfiguriert ist, um das Verfahren nach einem der Ansprüche 7 bis 9 durchzuführen, oder wobei die Kommunikationseinrichtung (600) konfiguriert ist, um das Verfahren nach einem der Ansprüche 10 bis 13 durchzuführen.

15. Computerprogrammprodukt, wobei das Computerprogrammprodukt ein Computerprogramm umfasst und wobei, wenn das Computerprogramm ausgeführt wird, das Verfahren nach einem der Ansprüche 1 bis 6, der Ansprüche 7 bis 9 oder der Ansprüche 10 bis 13 durchgeführt wird.

## Revendications

1. Procédé d'accès aléatoire, comprenant :
la réception (S501) d'un premier signal de synchronisation dans une première cellule ;
la réception (S502) d'une première information dans la première cellule sur la base du premier signal de synchronisation, la première information indiquant au moins l'un des éléments suivants : une ressource de domaine temporel de N deuxièmes signaux de synchronisation, une ressource de domaine fréquentiel des N deuxièmes signaux de synchronisation, ou une séquence des N deuxièmes signaux de synchronisation ; ou la première information indiquant une configuration d'accès aléatoire d'une deuxième cellule, et N étant un entier positif ;
la réception (S503) des N deuxièmes signaux de synchronisation dans la deuxième cellule ; et
l'émission d'un signal d'accès aléatoire dans la deuxième cellule sur la base des N deuxièmes signaux de synchronisation ou de la configuration d'accès aléatoire de la deuxième cellule,
la détermination (S504) d'une première perte de chemin sur la base du premier signal de synchronisation ; et
la détermination (S504) d'une deuxième perte de chemin sur la base des N deuxièmes signaux de synchronisation, la première perte de chemin étant supérieure à la deuxième perte de chemin.

2. Procédé selon la revendication 1, dans lequel le premier signal de synchronisation et les N deuxièmes signaux de synchronisation ont des configurations de domaine spatial différentes.

3. Procédé selon la revendication 1 ou 2, dans lequel la configuration d'accès aléatoire de la deuxième cellule comprend au moins l'un des éléments suivants :
une ressource de domaine temporel candidate du signal d'accès aléatoire, une ressource de domaine fréquentiel candidate du signal d'accès aléatoire, une ressource de domaine de code candidate du signal d'accès aléatoire, ou une information de puissance de transmission candidate du signal d'accès aléatoire.

4. Procédé selon l'une quelconque des revendications 1 à 3, dans lequel chaque signal de synchronisation dans les N deuxièmes signaux de synchronisation transporte un deuxième identifiant de cellule physique PCI, et une ressource temps-fréquence du signal d'accès aléatoire est déterminée sur la base du deuxième PCI ; ou
la ressource temps-fréquence du signal d'accès aléatoire est déterminée sur la base de la séquence des N deuxièmes signaux de synchronisation.

5. Procédé selon l'une quelconque des revendications 1 à 4, dans lequel le premier signal de synchronisation et les N deuxièmes signaux de synchronisation ont une même fréquence centrale.

6. Procédé selon l'une quelconque des revendications 1 à 5, dans lequel l'envoi d'un signal d'accès aléatoire sur la base des N deuxièmes signaux de synchronisation comprend :
la détermination d'un troisième signal de synchronisation, le troisième signal de synchronisation appartenant aux N deuxièmes signaux de synchronisation ; et
l'envoi du signal d'accès aléatoire sur la base du troisième signal de synchronisation.

7. Procédé de communication, comprenant :
l'envoi (S501) d'un premier signal de synchronisation dans une première cellule ; et
l'envoi (S502) d'une première information dans la première cellule, la première information indiquant au moins l'un des éléments suivants : une ressource de domaine temporel de N deuxièmes signaux de synchronisation, une ressource de domaine fréquentiel des N deuxièmes signaux de synchronisation, ou une séquence des N deuxièmes signaux de synchronisation ; ou la première information indiquant une configuration d'accès aléatoire d'une deuxième cellule, et N étant un entier positif,
dans lequel le premier signal de synchronisation correspond à une première perte de chemin, les N deuxièmes signaux de synchronisation correspondent à une deuxième perte de chemin, et la première perte de chemin est supérieure à la deuxième perte de chemin.

8. Procédé selon la revendication 7, dans lequel le premier signal de synchronisation et les N deuxièmes signaux de synchronisation ont des configurations de domaine spatial différentes.

9. Procédé selon l'une quelconque des revendications 7 à 8, dans lequel le premier signal de synchronisation et les N deuxièmes signaux de synchronisation ont une même fréquence centrale.

10. Procédé de communication, comprenant :
l'envoi (S503) de N deuxièmes signaux de synchronisation dans une deuxième cellule ; et
la réception d'un signal d'accès aléatoire, une ressource temps-fréquence du signal d'accès aléatoire étant déterminée sur la base des N deuxièmes signaux de synchronisation, une ressource temps-fréquence des N deuxièmes signaux de synchronisation ou une séquence des N deuxièmes signaux de synchronisation étant déterminée sur la base de premières informations, une ressource temps-fréquence d'informations d'ordonnancement des premières informations étant déterminée sur la base d'un premier signal de synchronisation, le premier signal de synchronisation et les N deuxièmes signaux de synchronisation ayant des configurations de domaine spatial différentes, et N étant un entier positif,
dans lequel le premier signal de synchronisation correspond à une première perte de chemin, les N deuxièmes signaux de synchronisation correspondent à une deuxième perte de chemin, et la première perte de chemin est supérieure à la deuxième perte de chemin.

11. Procédé selon la revendication 10, dans lequel
chaque deuxième signal de synchronisation dans les N deuxièmes signaux de synchronisation transporte un deuxième PCI, et la ressource temps-fréquence du signal d'accès aléatoire est déterminée sur la base du deuxième PCI ; ou
la ressource temps-fréquence du signal d'accès aléatoire est déterminée sur la base de la séquence des N deuxièmes signaux de synchronisation.

12. Procédé selon l'une quelconque des revendications 10 ou 11, dans lequel le premier signal de synchronisation et les N deuxièmes signaux de synchronisation ont une même fréquence centrale.

13. Procédé selon l'une quelconque des revendications 10 à 12, dans lequel la réception du signal d'accès aléatoire en provenance d'un dispositif terminal comprend :
la réception du signal d'accès aléatoire en provenance du dispositif terminal sur la base d'un troisième signal de synchronisation dans les N deuxièmes signaux de synchronisation.

14. Appareil de communication (600), dans lequel l'appareil de communication (600) est configuré pour réaliser le procédé selon l'une quelconque des revendications 1 à 6, ou l'appareil de communication (600) est configuré pour réaliser le procédé selon l'une quelconque des revendications 7 à 9, ou l'appareil de communication (600) est configuré pour réaliser le procédé selon l'une quelconque des revendications 10 à 13.

15. Produit programme informatique, dans lequel le produit programme informatique comprend un programme informatique, et lorsque le programme informatique est exécuté, le procédé selon l'une quelconque des revendications 1 à 6, des revendications 7 à 9 ou des revendications 10 à 13 est réalisé.
